# EUROPÄISCHE PATENTSCHRIFT

(11) **EP 1 247 251 B1**
(45) Veröffentlichungstag und Bekanntmachung des Hinweises auf die Patenterteilung: **28.04.2004**
(21) Anmeldenummer: 00900200.7
(22) Anmeldetag: 13.01.2000
(51) Int. Cl.: G06K 19/077, G06K 7/00

(54) **VERFAHREN UND VORRICHTUNG ZUM AUSTAUSCH VON DATEN MIT EINER CHIPKARTE**
METHOD AND APPARATUS FOR DATA EXCHANGE WITH AN IC CARD
PROCEDE ET DISPOSITIF CORRESPONDANT POUR L'ECHANGE DE DONNEES AVEC UNE CARTE A PUCE

(43) Veröffentlichungstag der Anmeldung: 09.10.2002
(73) Patentinhaber: Swisscom Mobile AG, 3050 Bern (CH)
(72) Erfinder: LAUPER, Eric, CH-3014 Bern (CH); SIERRO, Nicolas, CH-1800 Vevey (CH)
(74) Vertreter: BOVARD AG - Patentanwälte
(86) Internationale Anmeldenummer: PCT/CH2000/000021
(87) Internationale Veröffentlichungsnummer: WO 2001/052187

(56) Entgegenhaltungen:
- EP-A- 0 402 182
- EP-A- 0 713 189
- WO-A-99/48038
- DE-A- 19 609 186
- DE-U- 9 006 608
- FR-A- 2 616 938
- NL-C- 1 003 608
- US-A- 5 434 395
- US-A- 5 736 781

## Beschreibung

Die vorliegende Erfindung betrifft ein Verfahren und eine Transferchipkarte für den Austausch von Daten mit einer Chipkarte. Die Erfindung betrifft insbesondere Transferchipkarten im ISO-Format Norm ISO 7816 für den Datenaustausch mit Chipkarten im SIM-Karten-, WIM-Karten- oder UIM-Karten Format.

Chipkarten finden heute in ganz unterschiedlichen Gebieten weite Verbreitung, so z.B. beim bargeldlosen Zahlungsverkehr und in der Telekommunikation. In diesen Bereichen haben sich u.a. zwei Kartenformate durchgesetzt: Das Integrated Circuit (IC) Karten-Format, bekannt als Smart-Cards oder fullsize Cards, und das Subscriber Identification Module (SIM) Karten-Format. SIM-Karten werden, z.B. im Mobiltelefonbereich eingesetzt, basierend auf dem Global System for Mobile Communication (GSM) Standard, da die Grösse der SIM-Karten es erlaubt, sie als Plug-In Modul in Mobiltelefonen zu verwenden. Auf SIM-Karten können beispielsweise die Identität des Benutzers, Programme, Funktionen, Zertifikate und/oder Crypto-Schlüssel gespeichert werden. Die Aktualisierung der Daten auf SIM-Karten geschieht üblicherweise mit dem Austausch der alten SIM-Karte durch eine SIM-Karte mit aktualisierten Daten oder dem Einführen der SIM-Karte in eine Vorrichtung, die den Datentransfer durchführt und die dafür notwendige Energie zur Verfügung stellt. Es ist ebenfalls bekannt, die SIM-Karte für den Datentransfer auf einer grösseren Trägerkarte anzubringen, wobei für die Durchführung des Datentransfers jedoch ein externes Gerät mit Energiequelle und/oder einem Kontrollsystem verwendet wird. Als Trägerkarten werden z.B. IC-Format-Karten im ISO (International Organization for Standardization) Standard verwendet. Diese Smart-Cards besitzen das ISO-Format ISO 7816, z.B. gleich den Kreditkarten wie VISA- und Master-Karten. Smart-Cards besitzen üblicherweise einen Mikroprozessor mit einem EEPROM Memory, welches als Speicher für die Daten dient. EP0402182 beschreibt ein Datentransfersystem mit einer solchen ISO-Trägerkarte, das für den Zahlungsverkehr gebraucht wird. Die Trägerkarte umfasst einen Mikroprozessor, einen programmierbaren, löschbaren Speicher und eine Aufnahmestelle, weiche ein weiteres auswechselbares Speichermodul aufnehmen kann. Das auswechselbare Speichermodul besitzt Kontaktstellen. Die Karte wird zusammen mit dem auswechselbaren Speichermodul in ein externes Gerät mit Terminal eingeführt, welches über die Kontakte dem Mikroprozessor den Befehl gibt, den Datentransfer auszuführen, und welches die notwendige Energie für den Datentransfer liefert. Ebenfalls Stand der Technik sind Smartkartenleser im Kartenformat wie sie z.B. EP 0713189 oder die niederländische Patentschrift 1003608 zeigen. EP-A-0 713 189 zeigt die Merkmale des Oberbegriffs der Ansprüche 1 und 11. Diese portable Smartkartenleser verfügt über eine kontaktbehaftete Schnittstelle, ein Display zum Darstellen der gelesen Daten, eine Energiequelle und eine Kontrolleinheit, die die Daten von der Smartkarte liest und auf dem Display darstellt. Solche Smartkartenleser sind jedoch nur zu schnellen Abfragen von Daten, welche auf Smartkarten gespeichert sind, geeignet und könne nicht zur Übertragung oder Zwischenspeichern von Daten von Smartkarten verwendet werden.

Es ist eine Aufgabe der Erfindung, ein neues Verfahren und eine geeignete Vorrichtung, im Weiteren als Transferchipkarte bezeichnet, für den Austausch von Daten mit einer Chipkarte vorzuschlagen, welche beispielsweise erlauben, Daten wie Programme, Funktionen, Zertifikate, Crypto-Schlüssel etc. auf eine SIM-Karte zu transferieren, ohne dass ein weiteres externes Gerät und/oder Terminal verwendet werden muss.

Gemäss der vorliegenden Erfindung wird dieses Ziel Insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass eine Transferchipkarte für den Datenaustausch mit einer Chipkarte benutzt wird. Die Transferchipkarte umfasst ein Speichermodul für das Speichern der Daten sowie eine kontaktbehaftete Schnittstelle. Die Schnittstelle ermöglicht eine entfernbare Verbindung mit der Chipkarte. Diese Verbindung kann beispielsweise durch eine Oberflächenmontagetechnik (Surface Mount Technique SMT), wie z.B. der bei digitalen Bausteinen verbreiteten Clip on Board (COB) Technik, erreicht werden. Es kann aber auch sinnvoll sein, dass die Verbindung nur durch ein gegenseitiges Positionieren und Aufeinanderdrücken der Chipkarten erfolgt. Die Transferchipkarte umfasst weiter ein Energiespeisemodul und eine Kontrolleinheit, weiche den Datenaustausch unter Speisung durch das Energiespeisemodul über die kontaktbehaftete Schnittstelle mit der Chipkarte durchführt. Die Kontrolleinheit kann für den Datenaustausch selbständig auf den Datenspeicher der Chipkarte zugreifen oder die entsprechenden Befehle z.B. an einen Mikroprozessor auf der Chipkarte weiterleiten. Die Kontrolleinheit und der Mikroprozessor der Chipkarte arbeiten in diesem Fall für den Datenaustausch zusammen. Die Kontrolleinheit nimmt ebenfalls, falls notwendig, die entsprechenden Entschlüsselungen, Verschlüsselungen und/oder Signierungen der Daten vor. Es ist darauf hinzuweisen, dass der Datenaustausch auch von der Chipkarte aus durchgeführt werden kann. Speichermodul, Kontrolleinheit, Energiespeisemodul und die kontaktbehaftete Schnittstelle sind untereinander durch elektrische Verbindungen für die Stromversorgung, die Datenübermittlung und die Übermittlungssynchronisation, wie z. B. ein Clock-Signal, gekoppelt. Die Kontrolleinheit umfasst typischerweise einen programmierbaren Mikroprozessor, dessen Funktionen aber auch durch eine rein hardwaremässige Lösung ausgeübt werden können. Die Transferchipkarte kann sowohl für den einfachen wie auch den mehrfachen Gebrauch konzipiert sein. Ein Vorteil der Transferchipkarte bzw. des Verfahrens ist, dass es ganz ohne zusätzlich externe Geräte auskommt. Im Stand der Technik wird stets ein externes Gerät mit Energiequelle und/oder einem Kontrollsystem zur Durchführung des Datentransfers benutzt. Dies ist bei der vorliegenden Erfindung nicht notwendig. Dem Benutzer kann die Transferchipkarte z.B. vom Mobitfunknetzbetreiber, beispielsweise per Post, zugestellt werden. Der Benutzer der Chipkarte kann dann ohne grossen Aufwand den Datentransfer selbständig durch Positionieren der Chipkarte auf der Transferchipkarte vornehmen.

In einer Ausführungsvariante weist die Transferchipkarte die ISO-Format Norm ISO 7816 auf. Die ISO-Normen werden von der International Organization for Standardization (ISO) festgelegt. Diese Smart-Cards haben Kreditkartengrösse. Typischerweise weisen sie einen Mikroprozessor mit einem EEPROM-Speicher auf, welcher eine einfache Kontaktstelle mit acht flachen Kontaktpins C1-C8 besitzt. Von diesen acht Kontaktpins werden nur sechs gebraucht. Die Zuordnung der Kontaktpins ist wie folgt: C1=V.sub.cc (Supply Voltage), C2=RST (Reset), C3=CLK (Clock Signal), C4=Reserved, C5=GND (Ground), C6=V.sub.pp (Programming Voltage), C7=I/O (Data Input/Output) und C8=Reserved. Einer der Vorteile dieser Ausführungsvariante ist, dass diese Karten sehr dünn und leicht sind und sich deshalb für den Versand eignen. Ein weiterer Vorteil dieser Ausführungsvariante ist, dass wegen der Popularität der Smart-Cards eine grosse Menge Schreib-/Lesegeräte auf dem Markt erhältlich ist, so dass es z.B. für den Vertreiber solcher Transferchipkarten einfach ist, Daten auf die Transferchipkarte zu speichern.

In einer Ausführungsvariante ist die kontaktbehaftete Schnittstelle der Transferchipkarte derart ausgelegt, dass sie für den Datenaustausch mit einer SIM-Karte (Subscriber Identification Module) geeignet ist. Die SIM-Karten werden vom European Telecommunication Standard Institute standardisiert. SIM-Karten besitzen eine Grösse von 25mmx15mmx0.76mm. Die SIM-Karten benutzen ebenfalls eine Kontaktstelle mit 8 flachen Kontaktpins. Im Gegensatz zur Smart-Card sind aber nur 5 der Kontaktpins belegt für V.sub.cc, RST, CLK, GND und I/O. Die kontaktbehaftete Schnittstelle der Transferchipkarte entspricht in dieser Ausführungsvariante der Belegung der Kontaktpins der SIM-Karte. Plug-In-SIMs werden üblicherweise auf einer Trägerkarte, z.B. der Form CCM03 von ITT Cannon Corporation, untergebracht. Die SIM-Karten sind weit verbreitet im Mobiltelefonbereich basierend auf dem GSM-Standard (Global System for Mobile Communication). Der Speicherplatz auf SIM-Karten ist genügend gross um Identität, Verschlüsselungs- und Sicherheitsdaten, Telefonnummem, SMS-Messages etc. zu speichern. Einer der Vorteile dieser Ausführungsvariante ist, dass z.B. im Mobilfunkbereich dies insbesondere Dienstanbietem, z.B. Vertreibern und Drittanbietem von Programmen etc., welche beispielsweise über keinen Zugriff auf die notwendige Infrastruktur für die direkte Übermittlung von Daten über ein Mobilfunknetz auf zahlreiche Chipkarten, insbesondere SIM-Karten, verfügen, eine einfache Möglichkeit darstellt, Programme, insbesondere Spielprogramme, Spielpunkte, Spielparameter, Bonuspunkte, Prepaid-Geldwerte, Funktionen, Zertifikate, Crypto-Schlüssel etc. der SIM-Karten ihrer Kunden zu aktualisieren. Eine Transferchipkarte, z.B. im ISO-Format, eignet sich gut für den Versand und kann vom Kunden selbständig für den Datenaustausch mit der SIM-Karte, z.B. seines Mobiltelefons, benutzt werden, ohne dass der Kunde weitere Geräte benötigt.

In einer Ausführungsvariante ist die kontaktbehaftete Schnittstelle der Transferchipkarte derart ausgelegt, dass sie für den Datenaustausch mit einer WIM-Karte (WAP Identification Module) und/oder einer UIM-Karte (Universal Identification Module) geeignet ist. WAP (Wireless Application Protocol) erlangt durch den zunehmenden Intemetzugriff übers Mobilfunknetz mehr und mehr an Bedeutung, während UIM-Karten (Universal Identification Module) als Identifikationsmodule für GSM (Global System for Mobile Communication) und UMTS (Universal Mobile Telephone System) gebraucht werden.

In einer Ausführungsvariante besitzt die Transferchipkarte eine Aussparung, in welcher die Chipkarte positioniert und mechanisch fixiert werden kann, wobei Kontaktelemente der Chipkarte mit Kontaktelementen der kontaktbehafteten Schnittstelle für den Datenaustausch verbunden werden. Einer der Vorteile dieser Ausführungsvariante ist, dass es eine einfache, unkomplizierte Positionierung der Chipkarte auf der Transferchipkarte für den Benutzer erlaubt. Dazu kann z.B. auch eine der üblichen Clip on Board (COB) Techniken für Plug-In-Module verwendet werden. Insbesondere ist es auch möglich, die Transferchipkarte als Trägerkarte der SIM-Karte zu verwenden, z.B. zu Transport- oder Versandzwecken.

In einer weiteren Ausführungsvariante umfasst das Energiespeisemodul der Transferchipkarte eine Batterie und/oder Solarzellen und/oder eine Induktionsspule und/oder ein Thermoelement. Vorteile dieser Ausführungsvarianten sind, dass, ausser bei der Induktionsspule, der Datenaustausch gänzlich ohne weitere Geräte durchgeführt werden kann. Bei der Induktionsspule braucht es zwar ein externes Gerät, aber der Datenaustausch kann stattfinden, ohne dass die Energiespeisung über eine feste Verbindung mit diesem externen Gerät erfolgen muss. Z.B. kann der Benutzer die Transferchipkarte nach dem Positionieren der Chipkarte unter ein für diesen Zweck geeignetes Induktionsstromgerät halten und damit den Datenaustausch vornehmen. Alle diese Ausführungsvarianten können auch in Kombination verwendet werden, so z.B. eine wiederaufladbare Batterie in Kombination mit Solarzellen. Das Thermoelement kann z.B. vom Benutzer durch Reibwärme aktiviert werden. Es kann auch in Verbindung mit einer thermisch empfindlichen LCD-Einheit verwendet werden, die dem Benutzer das Ende des Datentransfers anzeigt.

In einer Ausführungsvariante umfasst die Transferchipkarte eine Schalteinheit, mittels derer der Datenaustausch ausgelöst wird.

In einer Ausführungsvariante umfasst die Transferchipkarte eine Schalteinheit, mittels derer die Richtung des Datentransfers umgekehrt werden kann. Diese Ausführungsvariante hat insbesondere den Vorteil, dass die Transferchipkarte nicht nur für den Update von Daten der Chipkarte verwendet werden kann, sondern auch z.B. zum Austausch von Daten zwischen zwei Chipkarten. Beispielsweise liesse das die auf einer SIM-Karte abgespeicherten Telefonnummern via Transferchipkarte auf eine andere SIM-Karte transferieren etc.

In einer Ausführungsvariante umfasst die Transferchipkarte eine Schalteinheit, mittels derer der Datenaustausch bidirektional zu einem Datenabgleich zwischen der Transferchipkarte und der Chipkarte führt, also eine Synchronisation der Daten der Chipkarten zur Folge hat. Diese Ausführungsvariante hat insbesondere den Vorteil, dass die Transferchipkarte nicht nur für den Update von Daten einer Chipkarte verwendet werden kann, sondern auch für den Datehabgleich zwischen einer Chipkarte und einer dritten Chipkarte.

In einer Ausführungsvariante gemäss einer der vorhergehenden Ausführungsvarianten umfasst die Transferchipkarte eine Schalteinheit, wobei die Schalteinheit über Kontaktelemente der kontaktbehafteten Schnittstelle aktiviert wird, indem in Verbindung mit der Chipkarte mindestens zwei der Kontaktelemente der Transferchipkarte so angeordnet sind, dass sie auf ein Kontaktelement der Chipkarte zu liegen kommen und dadurch miteinander verbunden und kurzgeschlossen werden. Einer der Vorteile liegt in der technisch einfachen Realisierungsmöglichkeit eines solchen Schalters.

An dieser Stelle soll festgehalten werden, dass sich die vorliegende Erfindung neben der erfindungsgemässen Vorrichtung auch auf ein Verfahren für den Datenaustausch zwischen einer Transferchipkarte und einer Chipkarte bezieht.

Nachfolgend werden Ausführungsvarianten der vorliegenden Erfindung anhand von Beispielen beschrieben. Die Beispiele der Ausführungen werden durch folgende beigelegten Figuren illustriert:
Figur 1 zeigt ein Blockdiagramm, welches den möglichen Aufbau einer Transferchipkarte ohne Schalteinheit darstellt.
Figur 2 zeigt ein Blockdiagramm, welches den möglichen Aufbau einer Transferchipkarte mit Schalteinheit darstellt.
Figur 3 zeigt schematisch mögliche Ausführungsbeispiele für die Aussparung mit der kontaktbehafteten Schnittstelle der Transferchipkarte.

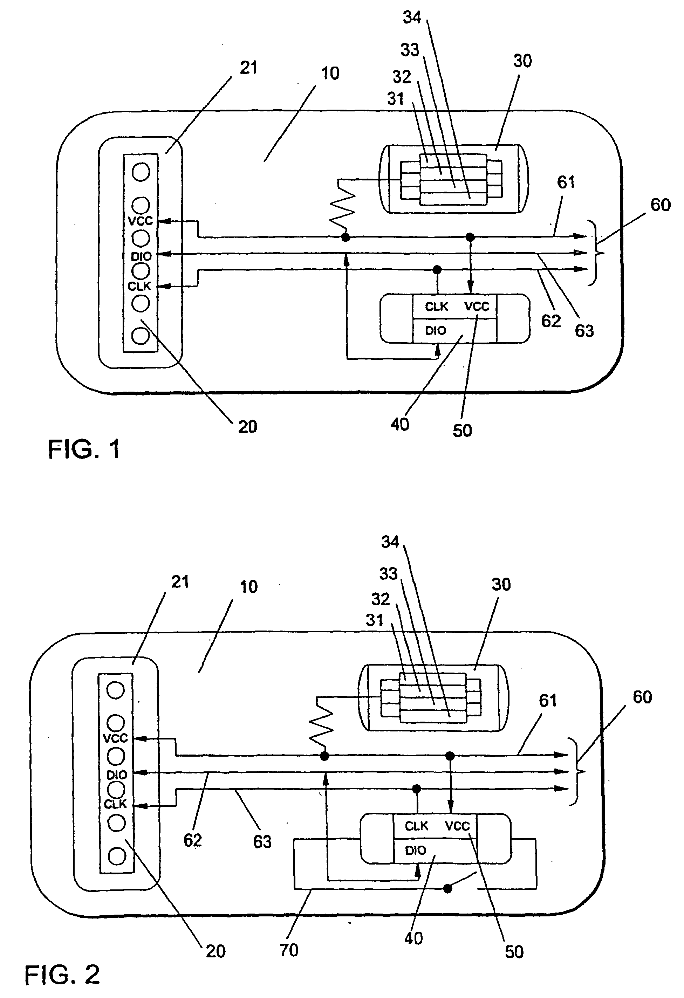

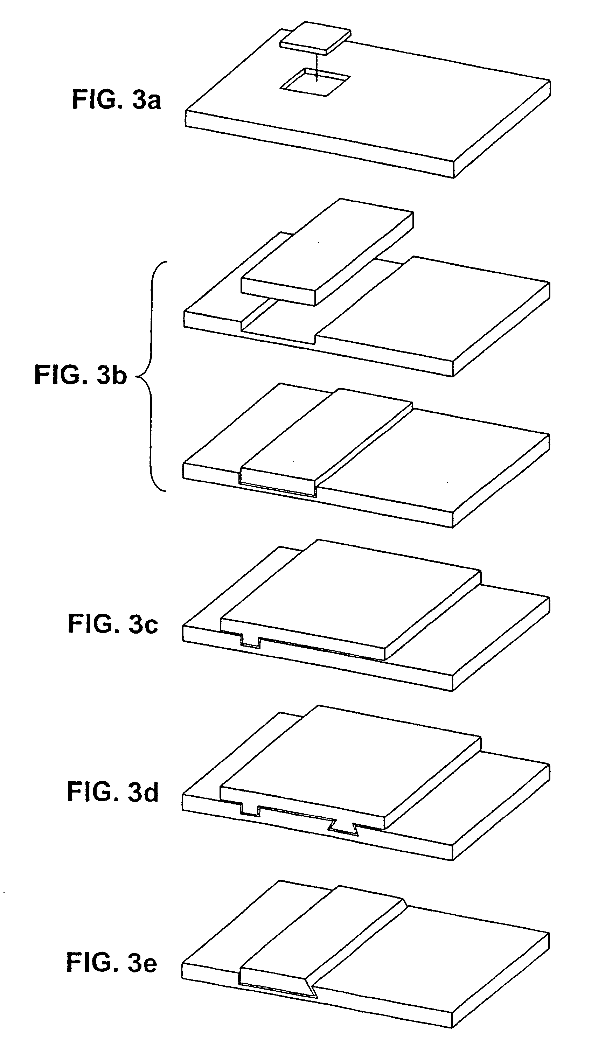

Figur 1 illustriert eine Architektur, die zur Realisierung der Erfindung verwendet werden kann. In diesem Ausführungsbeispiel umfasst die Transferchipkarte 10, welche ISO-Format Norm ISO 7816 aufweist, aus einer Kontrolleinheit 50 mit einem Mikroprozessor, einem Speichermodul 40, einem Energiespeisemodul 30, welche beispielsweise eine Batterie umfasst und einer kontaktbehafteten Schnittstelle 20. Die Bezugszeichen 31 bis 34 geben jeweils Varianten des Energiespeisemoduls an. Diese Varianten sind die Speisung durch eine Batterie 31, Solarzellen 32, eine Induktionsspule 33 und/oder ein Thermoelement 34. Die vier Varianten 31 bis 34 können auch in Kombination eingesetzt werden, so z.B. eine wiederaufladbare Batterie in Kombination mit Solarzellen. Die kontaktbehaftete Schnittstelle 20, das Energiespeisemodul 30, die Kontrolleinheit 50 und das Speichermodul 40 sind untereinander gekoppelt durch elektrische Verbindungen 60 für die Stromversorgung 61, die Datenübermittlung 63 und die Übermittlungssynchronisation 62, wie z.B. ein Clock-Signal. Die Transferchipkarte 10 umfasst eine Aussparung 21, weiche zum Positionieren und mechanischen Fixieren der SIM-Karte dient. Dies ist auf ganz verschiedene Arten möglich. Ohne abschliessend zu sein, sind einige der Möglichkeiten in Figur 3 wiedergegeben. Z. B. kann die Chipkarte die gleiche Grösse aufweisen wie die Transferchipkarte 10. Der Benutzer legt die beiden Chipkarten für den Datentransfer deckend übereinander. Eine andere Möglichkeit wäre, eine Chipkarte von der gleichen Breite wie die Transferchipkarte oder eine Aussparung, welche die Chipkarte ganz umfasst. Erhält der Benutzer eines Mobiltelefons, z.B. von der Mobilfunknetzbetreiberin, eine Transferchipkarte 10 zugestellt, nimmt er aus seinem Mobiltelefon die SIM-Karte und positioniert sie in der dafür vorgesehenen Aussparung 21 auf der Transferchipkarte 10. Nachdem der Kontakt zwischen der Transferchipkarte 10 und der Chipkarte hergestellt ist, startet die Kontrolleinheit 50 den Datenaustausch. Der Datenaustausch zwischen der Transferchipkarte 10 und der Chipkarte kann basierend auf bekannten Protokollen, beispielsweise im Client/Server oder Master/Slave Modus, vorgenommen werden. Der Datenaustausch wird zum Beispiel durch die Kontrolleinheit 50 mittels geeigneten APDU-Befehlen (Application Protocol Data Units) eingeleitet, beispielsweise durch ein programmiertes Softwaremodul, das im Speichermodul 40 gespeichert ist und durch die Kontrolleinheit 50 ausgeführt wird. Die Protokolldateneinheiten werden auf der Chipkarte durch ein entsprechendes Softwareprogramm entgegengenommen. Es ist auch möglich, dass die Daten durch das Softwaremodul der Kontrolleinheit 50 direkt in einen Datenspeicher der Chipkarte übertragen werden. Um zu verhindern, dass Daten unvollständig auf die Chipkarte geschrieben werden, beispielsweise wegen Kontaktunterbruch zwischen der Transferchipkarte 10 und der Chipkarte, können bekannte Rollback-Mechanismen vorgesehen werden. Sind die Daten auf die SIM-Karte transferiert, beispielsweise nach einer dem Benutzer bekannten Zeit oder einer Angabe auf einem nicht dargestellten LCD-Display der Transferchipkarte, fügt der Benutzer die SIM-Karte wieder in sein Mobiltelefon ein. Die Transferchipkarte 10 kann er anschliessend für einen weiteren Datenaustausch benutzen oder sie entsorgen, falls es eine Transferchipkarte 10 ist, die nur für den einmaligen Gebrauch gedacht ist.

Figur 2 illustriert eine Architektur, die zur Realisierung der Erfindung verwendet werden kann. In diesem Ausführungsbeispiel besteht die Transferchipkarte 10, welche ISO-Format Norm ISO 7816 aufweist, aus einer Kontrolleinheit 50 mit einem Mikroprozessor, einem Speichermodul 40, einem Energiespeisemodul 30, welches beispielsweise eine Batterie umfasst, und einer kontaktbehafteten Schnittstelle 20. Die Bezugszeichen 31 bis 34 geben jeweils Varianten des Energiespeisemoduls an für Speisung durch eine Batterie 31, Solarzellen 32, Induktionsspule 33 und Thermoelement 34. Die vier Varianten 31 bis 34 können auch in Kombination eingesetzt werden, so z.B. eine wiederaufladbare Batterie in Kombination mit Solarzellen. Die kontaktbehaftete Schnittstelle 20, das Energiespeisemodul 30, die Kontrolleinheit 50 und das Speichermodul 40 sind untereinander gekoppelt durch elektrische Verbindungen 60 für die Stromversorgung 61, die Datenübermittlung 63 und die Übermittlungssynchronisation 62, wie z.B. ein Clock-Signal. Die Transferchipkarte 10 umfasst eine Aussparung 21, welche zum Positionieren und mechanischen Fixieren der SIM-Karte dient. Dies ist auf ganz verschiedene Arten möglich. Wie in Figur 1 bereits beschrieben, ohne abschliessend zu sein, sind einige der Möglichkeiten in Figur 3 wiedergegeben. Der Mikroprozessor 50 ist mit einem oder mehreren Schalteinheiten 70 verbunden, durch welche beispielsweise der Datenaustausch ausgelöst werden kann oder die Richtung des Datentransfers umgekehrt werden kann. Die Aktivierung der Schalteinheit 70 geschieht dadurch, dass in Verbindung mit der Chipkarte zwei der Kontaktelemente der kontaktbehafteten Schnittstelle 20 auf einem Kontaktelement der Chipkarte zu liegen kommen und dadurch kurzgeschlossen werden. Es ist aber auch möglich, dass der Schalter dadurch aktiviert wird, dass in Verbindung mit der Chipkarte zwei der Kontaktelemente der Chipkarte auf einem Kontaktelement der kontaktbehafteten Schnittstelle 20 zu liegen kommen und dadurch kurzgeschlossen werden. Durch das Kurzschliessen der beiden Kontaktelemente wird im Mikroprozessor der entsprechende Prozess, beispielsweise das Einleiten des Datenaustausches oder die Umkehrung der Datentransferrichtung, ausgelöst, was entweder softwaremässig oder hardwaremässig geschehen kann. Erhält der Benutzer eines Mobiltelefons, z.B. von der Mobilfunknetzbetreiberin, eine solche Transferchipkarte 10 zugestellt, nimmt er aus seinem Mobiltelefon die SIM-Karte, positioniert sie in der dafür vorgesehenen Aussparung 21 auf der Transferchipkarte 10, betätigt, falls notwendig, die entsprechende Schalteinheit 70. Nachdem der Kontakt zwischen der Transferchipkarte 10 und der Chipkarte hergestellt ist, startet die Kontrolleinheit 50 den Datenaustausch. Der Datenaustausch zwischen der Transferchipkarte 10 und der Chipkarte kann, wie in Ausführungsbeispiel 1 beschrieben, basierend auf bekannten Protokollen, beispielsweise im Client/Server oder Master/Slave Modus, vorgenommen werden. Der Datenaustausch wird zum Beispiel durch die Kontrolleinheit 50 mittels geeigneten APDU-Befehlen (Application Protocol Data Units) eingeleitet, beispielsweise durch ein programmiertes Softwaremodul, das im Speichermodul 40 gespeichert ist und durch die Kontrolleinheit 50 ausgeführt wird. Die Protokolldateneinheiten werden auf der Chipkarte durch ein entsprechendes Softwareprogramm entgegengenommen. Es ist auch möglich, dass die Daten durch das Softwaremodul der Kontrolleinheit 50 direkt in einen Datenspeicher der Chipkarte übertragen werden. Um zu verhindern, dass Daten unvollständig auf die Chipkarte geschrieben werden, beispielsweise wegen Kontaktunterbruch zwischen der Transferchipkarte 10 und der Chipkarte, können bekannte Rollback-Mechanismen vorgesehen werden. Sind die Daten auf die SIM-Karte transferiert, beispielsweise nach einer dem Benutzer bekannten Zeit oder einer Angabe auf einem nicht dargestellten LCD-Display der Transferchipkarte, fügt der Benutzer die SIM-Karte wieder in sein Mobiltelefon ein. Die Transferchipkarte 10 kann er anschliessend für einen weiteren Datenaustausch benutzen oder sie entsorgen, falls es eine Transferchipkarte 10 ist, die nur für den einmaligen Gebrauch gedacht ist.

Figur 3 zeigt mehrere Ausführungsbeispiele, welche den möglichen Aufbau einer Transferchipkarte 10 mit Schalteinheit darstellen. Alle Ausführungsbeispiele benutzen eine Transferchipkarte 10 im fullsize Kartenformat. Ausführungsbeispiel Figur 3a stellt eine Transferchipkarte dar, deren Aussparung die Chipkarte ganz umfasst, während beim Ausführungsbeispiel Figur 3b die Breite der Chipkarte mit der Breite der Transferchipkarte 10 übereinstimmt. Beides ermöglicht ein einfaches und sicheres Positionieren der Chipkarte. Figur 3c zeigt eine Chipkarte mit einer zusätzlichen vorstehenden Positionierungshilfe. Die Positionierung der Chipkarte kann durch Fixierungshilfen, wie beispielsweise Schwalbenschwänze (Ausführungsbeispiele 3d und 3e), erweitert werden. Fixierungshilfen geben der Chipkarte zusätzlich Halt und sind sinnvoll z.B. für Transportzwecke.

Die vorliegende Erfindung ermöglicht beispielsweise die sichere Übergabe von Zertifikaten ins mobile Endgerät. Auch unabhängig von der Mobilfunknetzbetreiberin kann die Transferchipkarte für den Verkauf von Zusatzprogrammen oder Zusatzmenüs durch Dritte oder den Hersteller des Mobilfunkgerätes verwendet werden. Dies betrifft insbesondere den Verkauf von Transferchipkarten durch anonyme Verkaufsstellen, wie beispielsweise Kioske oder ähnliche autorisierte Verteilkanäle. In einer weiteren Anwendung ist es insbesondere auch vorstellbar, dass die Transferchipkarte zum Nachladen von Wertkarten für Applikationen im Zahlungsverkehr und/oder Zutrittsrechten zu Diensten, welche z.B. periodisch, beispielsweise monatlich oder jährlich, neu erworben werden müssen, verwendet wird.

## Patentansprüche

1. Transferchipkarte (10) für den Austausch von Daten mit einer Chipkarte, welche Transferchipkarte (10) ein Speichermodul (40) für das Speichem von Daten, eine kontaktbehaftete Schnittstelle (20) zur entfembaren Verbindung mit der Chipkarte sowie ein Energiespeisemodul (30) umfasst, **dadurch gekennzeichnet,**
**dass** die Transferchipkarte (10) eine Kontrolleinheit (50) umfasst, welche den Datenaustausch mit der Chipkarte unter Speisung durch das Energiespeisemodul (30) über die kontaktbehaftete Schnittstelle (20) durchführt, wobei die Richtung des Datentransfers mittels einer Schalteinheit (70) umkehrbar ist, und
**dass** die Schalteinheit (70) über Kontaktelemente der kontaktbehafteten Schnittstelle (20) aktivierbar ist, wobei die Kontaktelemente zur Aktivierung der Schalteinheit (70) so angeordnet sind, dass in Verbindung mit der Chipkarte mindestens zwei Kontaktelemente der kontaktbehafteten Schnittstelle (20) auf ein Kontaktelement der Chipkarte zu liegen kommen und dadurch die Kontaktelemente miteinander verbunden sind.

2. Transferchipkarte (10) nach Anspruch 1, **dadurch gekennzeichnet, dass** die Transferchipkarte (10) eine Schalteinheit (70) umfasst, mittels derer der Datenaustausch ausgelöst wird.

3. Transferchipkarte (10) nach einem der Ansprüche 1 oder 2, **dadurch gekennzeichnet, dass** mittels der Schalteinheit (70) der Datentransfer bidirektional als Datenabgleich zwischen der Transferkarte und der Chipkarte durchführbar ist.

4. Transferchipkarte (10) nach einem der Ansprüche 1 bis 3, **dadurch gekennzeichnet, dass** die Transferchipkarte (10) ISO-Format Norm ISO 7816 hat.

5. Transferchipkarte (10) nach einem der Ansprüche 1 bis 4, **dadurch gekennzeichnet, dass** die kontaktbehaftete Schnittstelle (20) für den Datenaustausch mit einer SIM-Karte ausgelegt ist

6. Transferchipkarte (10) nach einem der Ansprüche 1 bis 5, **dadurch gekennzeichnet, dass** die Transferchipkarte (10) mit einer Aussparung (21) versehen ist, in welcher die Chipkarte positioniert und/oder mechanisch fixiert werden kann, wobei Kontaktelemente der Chipkarte mit Kontaktelementen der kontaktbehafteten Schnittstelle (20) für den Datenaustausch verbunden werden.

7. Transferchipkarte (10) nach einem der Ansprüche 1 bis 6, **dadurch gekennzeichnet, dass** das Energiespeisemodul (30) eine Batterie (31) umfasst.

8. Transferchipkarte (10) nach einem der Ansprüche 1 bis 7, **dadurch gekennzeichnet, dass** das Energiespeisemodul (30) mindestens eine Solarzelle (32) umfasst.

9. Transferchipkarte (10) nach einem der Ansprüche 1 bis 8, **dadurch gekennzeichnet, dass** das Energiespeisemodul (30) eine Induktionsspule (33) umfasst.

10. Transferchipkarte (10) nach einem der Ansprüche 1 bis 9, **dadurch gekennzeichnet, dass** das Energiespeisemodul (30) ein Thermoelement (34) und/oder eine thermisch empfindliche LCD-Einheit umfasst.

11. Verfahren für den Austausch von Daten zwischen einer Transferchipkarte (10) und einer Chipkarte, in welchem Verfahren die Chipkarte über eine kontaktbehaftete Schnittstelle (20) entfernbar mit der Transferchipkarte (10) verbunden wird und welche Transferchipkarte (10) mittels eines Energiespeisemodul (30) gespiesen wird, **dadurch gekennzeichnet,**
**dass** eine Kontrolleinheit (50) der Transferchipkarte (20) den Datenaustausch über die kontaktbehaftete Schnittstelle (20) durchführt, wobei die Richtung des Datentransfers mittels einer Schalteinheit (70) bestimmt wird,
und **dass** die Schalteinheit (70) über Kontaktelemente der kontaktbehafteten Schnittstelle (20) aktiviert wird, wobei die Kontaktelemente so angeordnet sind, dass in Verbindung mit der Chipkarte mindestens zwei Kontaktelemente der kontaktbehafteten Schnittstelle (20) auf ein Kontaktelement der Chipkarte zu liegen kommen und dadurch die Kontaktelemente miteinander verbunden sind.

12. Verfahren nach Anspruch 11, **dadurch gekennzeichnet, dass** der Datenaustausch durch Aktivieren einer Schalteinheit (70) ausgelöst wird.

13. Verfahren nach einem der Ansprüche 11 oder 12, **dadurch gekennzeichnet, dass** der Datenaustausch durch Aktivieren einer Schalteinheit (70) bidirektional zu einem Datenabgleich zwischen der Transferchipkarte und der Chipkarte führt.

14. Verfahren nach einem der Ansprüche 11 bis 13, **dadurch gekennzeichnet, dass** für den Datenaustausch eine Transferchipkarte (10) mit ISO-Format Norm ISO 7816 benutzt wird.

15. Verfahren nach einem der Ansprüche 11 bis 14, **dadurch gekennzeichnet, dass** der Datenaustausch zwischen der Transferchipkarte (10) und einer SIM-Karte stattfindet.

16. Verfahren nach einem der Ansprüche 11 bis 15, **dadurch gekennzeichnet, dass** die Chipkarte in einer Aussparung (21) auf der Transferchipkarte (10) positioniert und/oder mechanisch fixiert wird, wobei Kontaktelemente der Chipkarte mit Kontaktelementen der kontaktbehafteten Schnittstelle (20) für den Datenaustausch verbunden werden.

17. Verfahren nach einem der Ansprüche 11 bis 16, **dadurch gekennzeichnet, dass** die Chipkarten für den Datenaustausch durch eine Batterie (31) des Energiespeisemoduls (30) gespiesen werden.

18. Verfahren nach einem der Ansprüche 11 bis 17, **dadurch gekennzeichnet, dass** die Chipkarten für den Datentransfer durch mindestens eine Solarzelle (32) des Energiespeisemoduls (30) gespiesen werden.

19. Verfahren nach einem der Ansprüche 11 bis 18, **dadurch gekennzeichnet, dass** die Chipkarten für den Datentransfer durch eine Induktionsspule (33) des Energiespeisemoduls (30) gespiesen werden.

20. Verfahren nach einem der Ansprüche 11 bis 19, **dadurch gekennzeichnet, dass** die Chipkarten für den Datentransfer durch ein Thermoelement (34) des Energiespeisemoduls (30) gespiesen werden und/oder eine thermisch empfindliche LCD-Einheit das Ende des Datenaustausches anzeigt.

## Claims

1. Transfer chipcard (10) for the exchange of data with a chipcard, which transfer chipcard (10) comprises a memory module (40) for storing data, an interface (20), having contacts, for removable connection to the chipcard, as well as an energy supply module (30), **characterised**
**in that** the transfer chipcard (10) comprises a control unit (50), which carries out the data exchange with the chipcard, with supply by the energy supply module (30), via an interface (20) having contacts, the direction of the data exchange being reversible by means of a switch unit (70), and
**in that** the switch unit (70) is able to be activated via contact elements of the interface (20) having contacts, the contact elements for activation of the switch unit (70) being disposed such that, in connection with the chipcard, at least two contact elements of the interface (20), having contacts, come to lie on a contact element of the chipcard, and the contact elements are thereby connected to one another.

2. Transfer chipcard (10) according to claim 1, **characterised in that** the transfer chipcard (10) comprises a switch unit (70) by means of which the data exchange is triggered.

3. Transfer chipcard (10) according to one of the claims 1 or 2, **characterised in that** by means of the switch unit (70) the data transfer is feasible bidirectionally as data reconciliation between the transfer card and the chipcard.

4. Transfer chipcard (10) according to one of the claims 1 to 3, **characterised in that** the transfer chipcard (10) has ISO format standard ISO 7816.

5. Transfer chipcard (10) according to one of the claims 1 to 4, **characterised in that** the interface (20), having contacts, is designed for data exchange with an SIM card.

6. Transfer chipcard (10) according to one of the claims 1 to 5, **characterised in that** the transfer chipcard (10) is provided with a recess (21) in which the chipcard is able to be positioned and/or mechanically fixed, contact elements of the chipcard being connected, for the data exchange, to contact elements of the interface (20), having contacts.

7. Transfer chipcard (10) according to one of the claims 1 to 6, **characterised in that** the energy supply module (30) comprises a battery (31).

8. Transfer chipcard (10) according to one of the claims 1 to 7, **characterised in that** the energy supply module (30) comprises at least one solar cell (32).

9. Transfer chipcard (10) according to one of the claims 1 to 8, **characterised in that** the energy supply module (30) comprises an induction coil (33).

10. Transfer chipcard (10) according to one of the claims 1 to 9, **characterised in that** the energy supply module (30) comprises a thermo-element (34) and/or a thermally sensitive LCD unit.

11. Method for exchange of data between a transfer chipcard (10) and a chipcard, in which method the chipcard is removably connected to the transfer chipcard (10) via an interface (20) having contacts, and which transfer chipcard (10) is supplied by means of an energy supply module (30), **characterised**
**in that** a control unit (50) of the transfer chipcard (20) carries out the data exchange via the interface (20) having contacts, the direction of the data transfer being determined by means of a switch unit (70),
and the switch unit (70) is activated via contact elements of the interface (20) having contacts, the contact elements being disposed such that, in connection with the chipcard, at least two contact elements of the interface (20) having contacts come to lie on a contact element of the chipcard and the contact elements are thereby connected to one another.

12. Method according to claim 11, **characterised in that** the data exchange is triggered through activation of a switch unit (70).

13. Method according to one of the claims 11 or 12, **characterised in that** the data exchange through activation of a switch unit (70) leads bidirectionally to a data reconciliation between the transfer chipcard and the chipcard.

14. Method according to one of the claims 11 to 13, **characterised in that** a transfer chipcard (10) with ISO format standard ISO 7816 is used for the data exchange.

15. Method according to one of the claims 11 to 14, **characterised in that** the data exchange takes place between the transfer chipcard (10) and an SIM card.

16. Method according to one of the claims 11 to 15, **characterised in that** the chipcard is positioned and/or mechanically fixed in a recess (21) on the transfer chipcard (10), contact elements of the chipcard being connected, for data exchange, to contact elements of the interface (20) having contacts.

17. Method according to one of the claims 11 to 16, **characterised in that** the chipcards are supplied for the data exchange by a battery (31) of the energy supply module (30).

18. Method according to one of the claims 11 to 17, **characterised in that** the chipcards are supplied for the data transfer by at least one solar cell (32) of the energy supply module (30).

19. Method according to one of the claims 11 to 18, **characterised in that** the chipcards are supplied for the data transfer by at least one induction coil (33) of the energy supply module (30).

20. Method according to one of the claims 11 to 19, **characterised in that** the chipcards are supplied for the data transfer by a thermo-element (34) of the energy supply module (30) and/or a thermally sensitive LCD unit indicates the end of the data exchange.

## Revendications

1. Carte à puce de transfert (10) pour l'échange de données avec une carte à puce, carte à puce de transfert (10) qui comprend un module de mémoire (40) pour le stockage de données, une interface à contact (20) pour une connexion amovible à la carte à puce et un module d'alimentation d'énergie (30) **caractérisée**
**en ce que** la carte à puce de transfert (10) comprend une unité de contrôle (50) qui exécute l'échange de données avec la carte à puce par l'interface à contact (20) alimentée par le module d'alimentation électrique (30), la direction du transfert de données étant réversible au moyen d'une unité de commutation (70) et
**en ce que** l'unité de commutation (70) est activable par des éléments de contact de l'interface à contact (20), les éléments de contact pour l'activation de l'unité de commutation (70) étant disposés de sorte qu'en association avec la carte à puce au moins deux éléments de contact de l'interface à contact (20) venant s'appliquer contre un élément de contact de la carte à puce et ainsi reliant les éléments de contact entre eux.

2. Carte à puce de transfert (10) selon la revendication 1, **caractérisée en ce que** la carte à puce de transfert (10) comprend une unité de commutation (70) au moyen de laquelle l'échange de données est déclenché.

3. Carte à puce de transfert (10) selon l'une des revendications 1 ou 2, **caractérisée en ce qu'**au moyen de l'unité de commutation (70), le transfert des données est exécutable bidirectionnellement en tant que compensation de données entre la carte de transfert et la carte à puce.

4. Carte à puce de transfert (10) selon l'une des revendications 1 à 3, **caractérisée en ce que** la carte à puce de transfert (10) présente le format ISO norme ISO 7816.

5. Carte à puce de transfert (10) selon l'une des revendications 1 à 4, **caractérisée en ce que** l'interface à contact (20) est réalisée pour l'échange de données avec une carte SIM.

6. Carte à puce de transfert (10) selon l'une des revendications 1 à 5, **caractérisée en ce que** la carte à puce de transfert (10) est munie d'un évidement (21) dans lequel la carte à puce peut être positionnée et/ou fixée mécaniquement, des éléments de contact (20) étant reliés pour l'échange des données.

7. Carte à puce de transfert (10) selon l'une des revendications 1 à 6, **caractérisé en ce que** le module d'alimentation électrique (30) comprend une pile (31).

8. Carte à puce de transfert (10) selon l'une des revendications 1 à 8, **caractérisée en ce que** le module d'alimentation de courant (30) comprend au moins une cellule solaire (32).

9. Carte à puce de transfert (10) selon l'une des revendications 1 à 8, **caractérisée en ce que** le module d'alimentation de courant (30) comprend au moins une bobine à induction (33).

10. Carte à puce de transfert (10) selon l'une des revendications 1 à 9, **caractérisée en ce que** le module d'alimentation de courant (30) comprend un thermocouple (34) et/ou une unité LCD thermosensible.

11. Procédé pour l'échange de données entre une carte à puce de transfert (10) et une carte à puce, procédé dans lequel la carte à puce est reliée de manière amovible à la carte à puce de transfert (10) par l'intermédiaire d'une interface à contact (20) et carte à puce de transfert (10) qui est alimentée à un module d'alimentation en courant (30), **caractérisé**
**en ce qu'**une unité de commande (50) de la carte à puce de transfert (20) exécute l'échange de données par l'interface à contact (20), le sens du transfert de données étant défini au moyen d'une unité de commande (70),
et **en ce que** l'unité de commutation (70) est activée par des éléments de contact de l'interface à contact (20), les éléments de contact étant disposés de sorte qu'en liaison avec la carte à puce au moins deux éléments de contact de l'interface à contact (20) viennent s'appliquer sur un élément de contact de la carte à puce reliant ainsi les éléments de contact entre eux.

12. Procédé selon la revendication 11, **caractérisé en ce que** l'échange de données est déclenché par activation d'une unité de commutation (70)

13. Procédé selon l'une des revendications 11 ou 12, **caractérisé en ce que** l'échange de données entraîne par activation d'une unité de commutation (70) une synchronisation bidirectionnelle des données entre la carte à puce de transfert et la carte à puce.

14. Procédé selon l'une des revendications 11 à 13, **caractérisé en ce que** pour l'échange de données, une carte à puce de transfert (10) présentant le format ISO norme ISO 7816 est utilisée.

15. Procédé selon l'une des revendications 11 à 14, **caractérisé en ce que** l'échange de données s'effectue entre la carte à puce de transfert (10) et une carte SIM.

16. Procédé selon l'une des revendications 11 à 15, **caractérisé en ce que** la carte à puce est positionnée et/ou fixée mécaniquement dans un évidement (21) sur la carte à puce de transfert (10), des éléments de contact de la carte à puce étant reliés à des éléments de contact de l'interface à contact (20) pour l'échange de données.

17. Procédé selon l'une des revendications 11 à 16, **caractérisé en ce que** les cartes à puce sont alimentées pour le transfert de données par une pile (31) du module d'alimentation de courant (30).

18. Procédé selon l'une des revendications 11 à 17, **caractérisé en ce que** les cartes à puce sont alimentées pour le transfert de données par au moins une cellule solaire (32) du module d'alimentation électrique (30).

19. Procédé selon l'une des revendications 11 à 18, **caractérisé en ce que** les cartes à puce sont alimentées pour le transfert de données par une bobine à induction (33) du module d'alimentation électrique (30).

20. Procédé selon l'une des revendications 11 à 19, **caractérisé en ce que** les cartes à puce sont alimentées pour le transfert de données par un thermocouple (34) du module d'alimentation électrique (30) et/ou un affichage LCD thermosensible affiche la fin de l'échange de données.
